# EUROPEAN PATENT APPLICATION

(11) **EP 0 613 838 A1**
(43) Date of publication of application: **07.09.1994**
(21) Application number: 94101787.3
(22) Date of filing: 07.02.1994
(51) Int. Cl.: B65G 17/00, B65G 47/08

(54) **Apparatus for conveying and grouping products**

(30) Priority: 04.03.1993 IT MI930414
(71) Applicant: GECA S.R.L., I-20131 Milano (IT)
(72) Inventor: Bellante, Paolo, I-20090 Segrate (Milano) (IT)
(74) Representative: Petruzziello, Aldo

(57) **Abstract**

An apparatus for conveying, collecting and grouping foodstuffs and other products, or packs (P), coming from at least one conveyor (3) at the exit from a production line and directed for example towards cartoning, comprising an endless conveyor (T) on which idle trolleys (7) run, having on their outside product collection pockets (6) and with at least one accelerator unit (50) positioned on the inside of the said conveyor (T), consisting of a second thrust conveyor (51) suitable for exerting rolling friction on the trolleys (7) in their forward direction.

## Description

The object of the present invention is an apparatus for conveying and orderly grouping products or packs coming one after the other from one or more supply conveyors, particularly packaging lines in the foodstuffs sector or in other packing sectors.

Apparatuses of the above type are already known and are mainly utilized for transferring foodstuffs or other products, on leaving a wrapping machine, to a subsequent packing or cartoning station, where such products are taken individually or in groups and put into suitable container boxes, or in subsequent grouping and conveyor systems.

As far as possible, these apparatuses must even out the different feed rate or the discontinuities of the incoming products. For this purpose, apparatuses have been planned in which the products are collected individually in independent seats or pockets, each carried by a trolley which is idle mounted on an endless conveyor. Such trolleys are operated only when the corresponding pockets have been filled with the product.

The operating means for the trolleys, which are usually idle, consist of purely mechanical means, associated with the individual trolleys, such as, for example, friction plates, belts, bands, and the like. This leads to the apparatus having a very complex structure, but, more especially, these means are subject to wear and therefore breaking as time goes on.

This is a serious problem if it is considered that the said apparatuses are, in most cases, included in foodstuff production lines, such as lines for producing icecream or oven-baked products, and for this reason any downtime of the apparatus, in order to be able to carry out the replacement of a damaged part, involves considerable loss of the product, which continues to be fed in by the lines upstream.

The aim of the invention is to eliminate the above drawbacks by providing an apparatus for conveying, collecting and grouping products or packs, which is structurally simple, and therefore economical, in which the risks of failure due to wear have been reduced to a minimum, if not entirely removed, by greatly reducing the mechanical operating means for the independent trolleys.

The aim is achieved, according to the invention by means of the characteristics listed in the appended claims.

In particular, the idle trolleys, run inside an endless conveyor, and the said endless conveyor consists of two double side chains in which the outer rollers receive their motion by means of usual toothed sprockets and are guided by special chain guides, while the inner rollers guide the trolleys, which, although they are idle, move forward along the conveyor by the effect of their own weight. At some particular points, for instance before the product loading area, a device with accelerator chains guarantees greater feeding thrust, which allows each individual idle trolley to rise and consequently come into position in the upper loading area, and the trolley to be evacuated rapidly on the upper leg of the chain ring once the product is loaded.

Further characteristics of the invention will be made clearer by the detailed description given below, which refers to one of its merely exemplary and therefore not restrictive embodiments, illustrated in the appended drawings, and in which:
figure 1 is a perspective diagrammatic view of an apparatus for conveying, collecting and grouping products according to the invention, with one single feeding line;
figure 2 is a top plan view of such apparatus;
figure 3 is a longitudinal diagrammatic section taken along the line III-III in figure 2;
figure 4 is a transverse section taken along the line IV-IV in figure 3;
figure 5 is a partial diagrammatic top plan view of an apparatus according to the invention, with two feeding lines for the products and with regular functioning;
figure 6 is a diagrammatic sectional view, taken along the line VI-VI in figure 5;
figure 7 is a view like the one in figure 5, with irregular feeding of the products on the two lines;
figure 8 is a diagrammatic sectional view taken along the line VIII-VIII in figure 7.
figure 9 is a perspective diagrammatic view of an embodiment with the grooved wheel positioned on the upper rectilinear section;
figure 10 is a detailed perspective view of the accelerator chains near the feed of the grooved wheel;
figure 11 is a side elevation view of the last section of a single feeder;
figure 12 is a top plan view;
figure 13 is a section taken along the line XIII-XIII in figure 11;
figures 14a, b, c, are diagrammatic top plan views showing subsequent phases of introducing a product into a pocket.

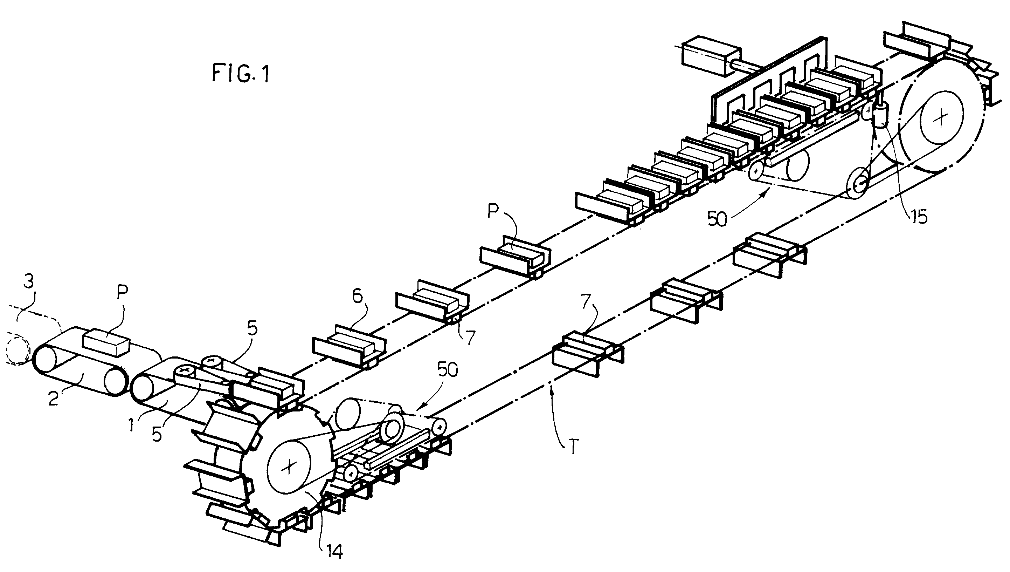

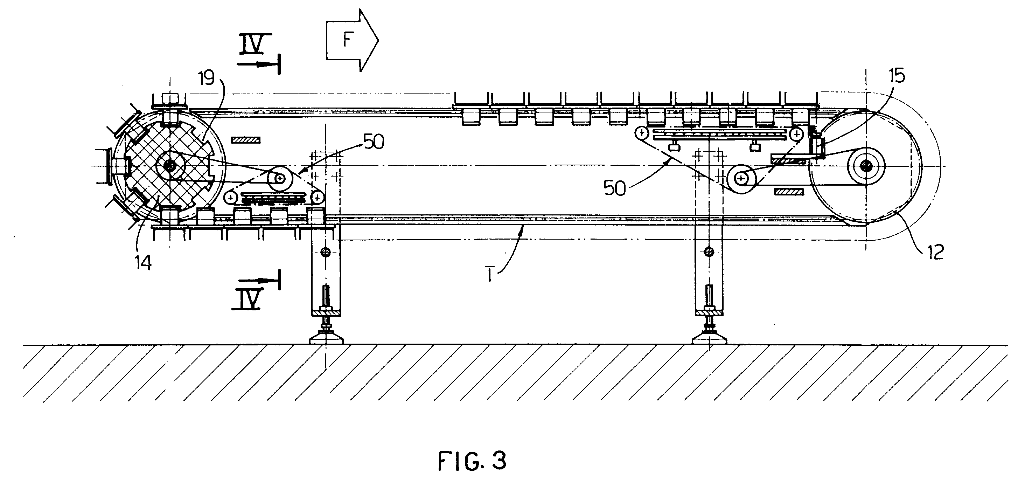

In the figures 1 to 4, reference number 3 shows a feeder belt, coming for example from a wrapping machine or production line, by which the products P, which may be at irregular intervals, are transferred to two variable speed belts 2 and 1, along which photoelectric cells 4 are located, which detect the presence of the products P and the distance between them, which may be varied with the sudden variation of the speed of the belts 1 and 2, which are controlled by an electronic numerical control system. In this way, a minimum distance is always guraranteed between the products, which is indispensable for their subsequent introduction into the individual collection pockets 6, to be described more fully later, said pockets moving forward in the direction of the arrow F (figure 3), along an endless conveyor T. In the final section of belt 1 two side belts 5 are provided, which, when particularly high speeds are involved, can oscillate in the direction of the forward movement of the collection pockets, acting as a guide for the product 3 and therefore further facilitating its introduction.

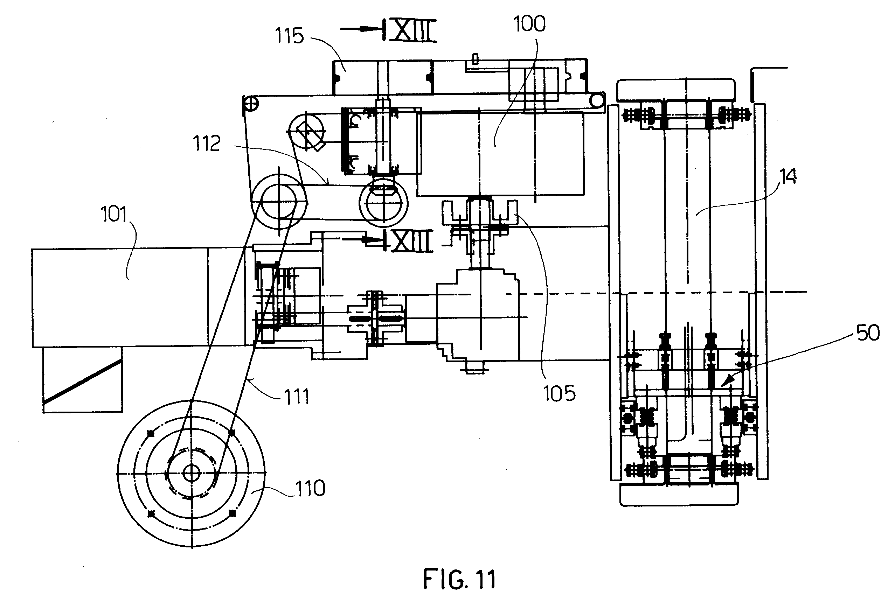

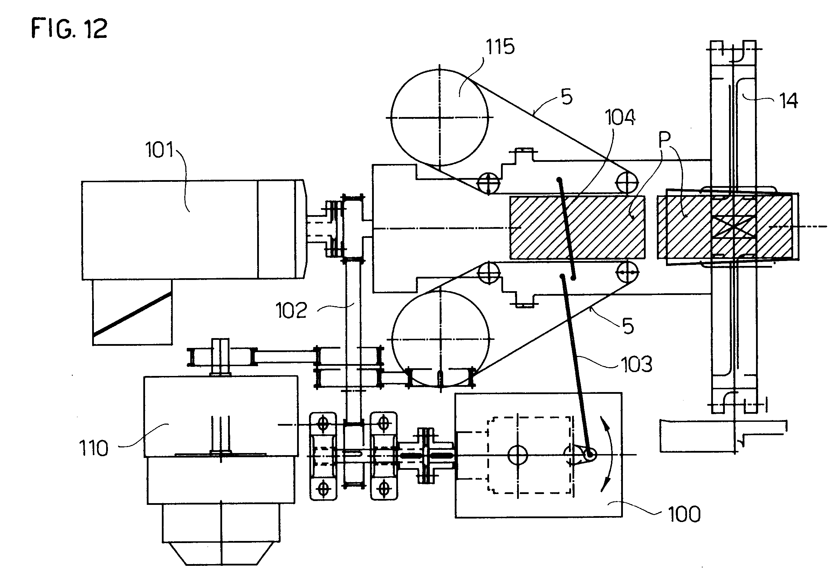

A more detailed description of the oscillating motion of the belts 5 will be given later with reference to the figures 11 - 14.

The collection pockets 6 are fixed to respective idle trolleys 7, made of antifriction material.

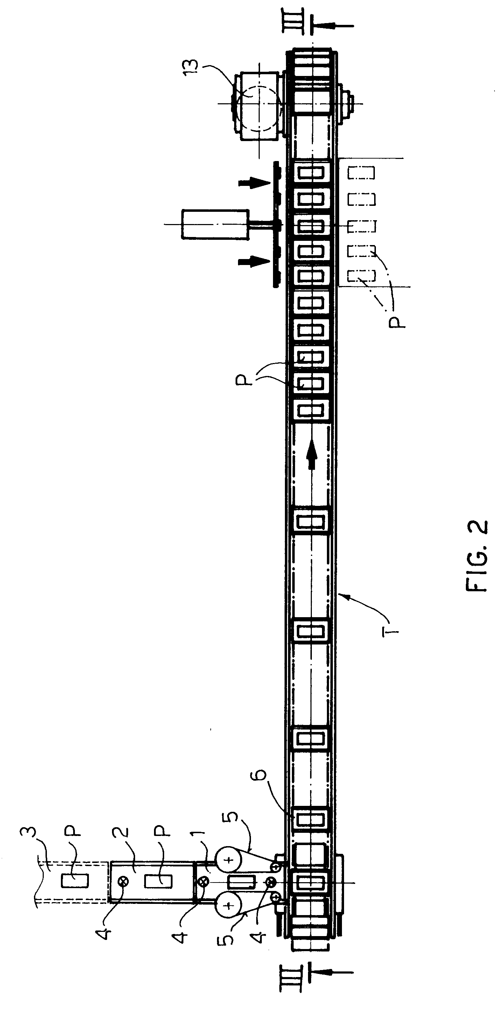

All the trolleys 7, whose number can vary according to the feeding speeds required, the type of grouping desired etc. run on the inside of the endless conveyor T, which consists of the two double chains 10, in which outer rollers 17 are guided by chain guides 11, also made of antifriction material, and receive their motion by means of normal toothed sprocket wheels 12 positioned at one end of the path of the endless conveyor (figure 3), said wheels being driven by a motor 13 (figure 2), while inner rollers 18 guide the trolleys 7, which, although they are idle, move forward along the endless conveyor path by the effect of their own weight.

At the end of the endless conveyor opposite to the one where motorized sprocket wheels 12 are located, a grooved wheel 14 is foreseen, having a plurality of equally spaced seats 19 on its periphery, whose task is to feed the trolleys 7 and the relative pockets 6 in a constant manner in the upper loading area, at the exit from the belt 1.

Obviously the grooved wheel 14 is operated independently by the sprocket wheels 12 at variable speed, under control of photocells 4 for detecting the products P, in such a way as to enable it to adapt to the arrival speeds of the product, given that these speeds can vary; in the case of a failure in feeding the product, the wheel 14 will stop suddenly to avoid pockets 6 leaving the loading area without product.

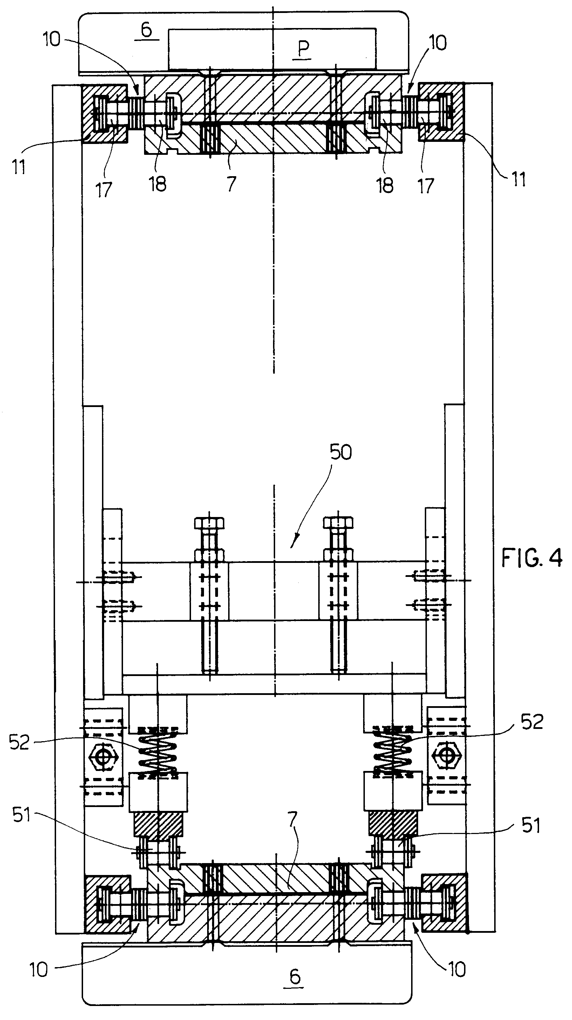

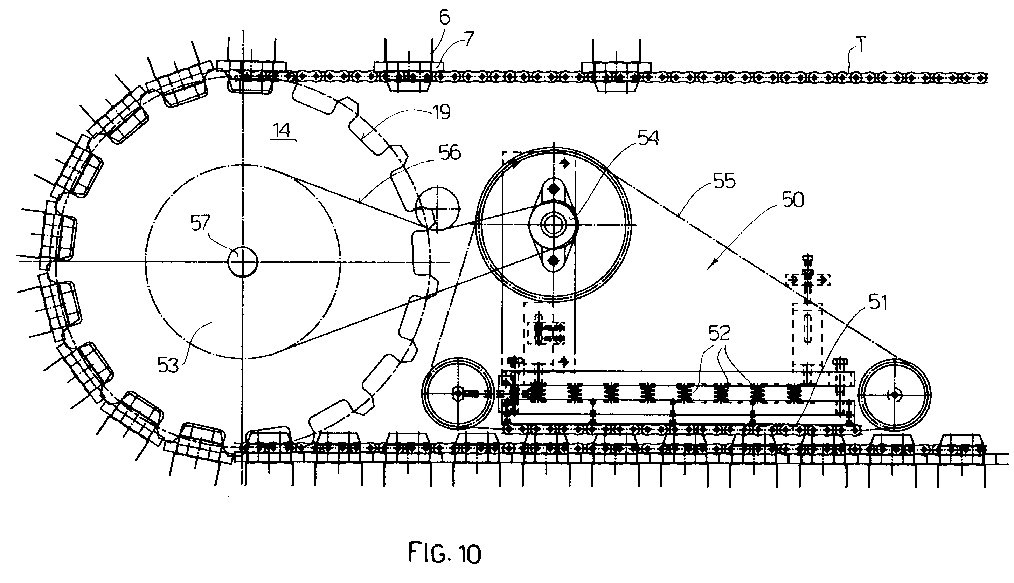

Likewise it must be guaranteed that a trolley 7 is housed in each seat 19 of the grooved wheel 14, so as to avoid the product P being transferred from the belt 1 to the conveyor T without a corrresponding collection pocket 6 being present. For this purpose, in correspondence with the lower part of the conveyor T, an accelerator unit 50 is foreseen (see in detail figures 4 and 10), comprising two thrust chains 51 with spring pressure systems 52 which allow greater rolling friction on the lateral ends of the idle trolleys 7, in this way guaranteeing greater forward thrust towards the grooved wheel 14. The thrust chains 51 receive the motion from side pulleys 53, 54 connected by means of belt 56; the pulley 53 is integral with the central shaft 57 which moves the grooved wheel 14 also; or the chains 51 can be moved by an independent motor. It should be noted that, thanks to the transmission ratio given by the pulleys, it is possible to achieve a speed of the thrust chains 51 which is much higher compared with the speed of the conveyor T, whose motion is imparted by the motor 13; this guarantees greater thrust of the trolleys. A further detail is that if the thrust chains 51 are connected to the movement of the grooved wheel 14, they act only when the wheel is moving; if the grooved feeder wheel stops (for instance through failure of products to arrive from the feeder belt 3 the thrust chains come to a halt and do not generate any supplementary thrust, which would be useless if not indeed damaging, causing unnecessary wear and pressure on the pockets. As soon the grooved wheel comes into operation again, however, the supplementary thrust on the idle trolleys is restored. Alternatively means can be foreseen for insulating the spring system 52, which allow the chains 51 to be spaced out as needed from the inner face of the trolleys 7. Thanks to this system it has been possible to achieve an extremely simple realization of trolleys without introducing any element for supplementary mechanical thrust on each trolley.

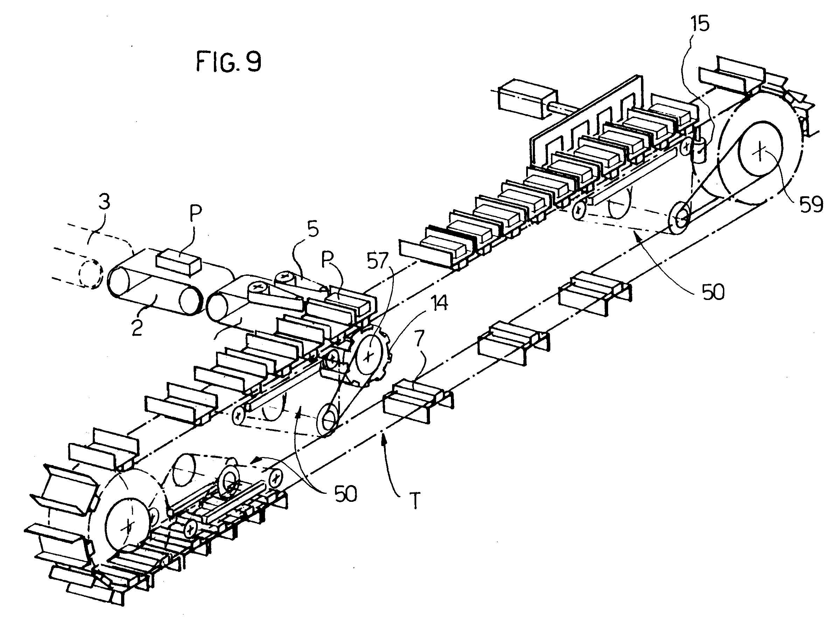

In an alternative embodiment (see figure 9) the grooved wheel 14, realized with reduced size, is located on the upper rectilinear section of the conveyor T and is fed by an accelerator unit with thrust chains 51 (analogous to the one described above) located on the upper initial section, creating a rectilinear bunching of trolleys 7 before the grooved wheel . With this solution the masses both of the grooved wheel and of the trolleys meshed onto it are greatly reduced, consequently allowing greater rapidity of movement at high speed. In such case, obviously only return sprocket wheels without a grooved wheel will be foreseen at the end of the endless conveyor opposite to the one with the motorized sprocket wheels 12.

In both cases, once the product has been loaded into a corresponding pocket 6 the respective trolley 7 is quickly shifted by further rotation of the grooved wheel 14 and is left to be transported freely on the upper leg of the chain conveyor T. In the final zone of the conveyor T a lower stop 15 halts the trolleys 7 on arrival, which bunch and allow the product/s contained in the pockets to be taken from the pockets by means of systems with suckers, pincers, needles etc, or to be deviated individually or in groups to feed hoppers, block conveyor chains, subsequent grouping and conveyor systems, hands or robots, for example, for final packaging in boxes, corrugated cardboard cartons, display packs and the like.

In figures 1, 3 and 9 it can be noted how an accelerator unit can be introduced near the timer 15 also, with thrust chains 51 operated by the shaft 59 on which the toothed sprocket wheels 12 are also mounted, or also by possible independent driving means, which with particularly high production speeds facilitate the evacuation of the idle trolleys when the product contained in them has already been unloaded, and the subsequent topping up with idle trolleys with full collection pockets 6. The use may also be foreseen of means such as pneumatic pistons, whose intermittent functioning allows the thrust imparted by the thrust chains 51 to be excluded when it is not necessary.

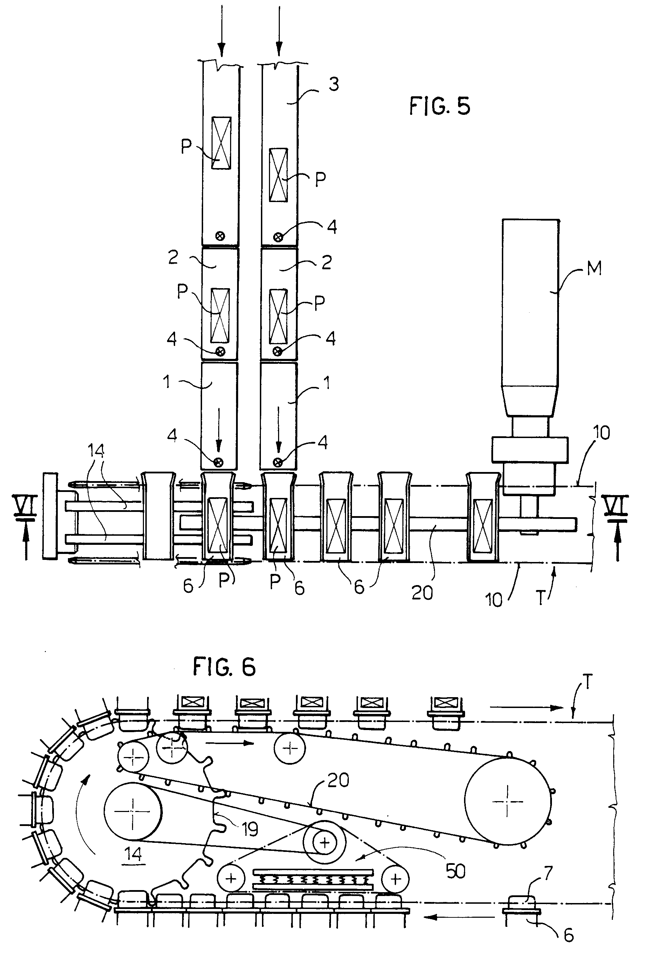

A multiple feed embodiment according to figures 5 to 8 will now be briefly described, using the same reference numbers as those already used for the figures 1 to 4 to indicate the same or similar parts. It will be noted that the apparatus has not been shown in its entirety, since it is substantially identical to the one already described, from which it differs only in that it provides, instead of one, more than one feeding belts 3 for the products P, with respective variable speed belts 2 and 1 and photocells 4 to detect the presence of the products P and the distance between them.

In the figures an embodiment with two feeding lines has been shown, but obviously more lines can be foreseen.

The collection pockets 6 are positioned in the respective filling areas by a toothed belt 20 to which they are fed in phase by the grooved wheel 14, consisting in this case of two star disks 14, between which an end portion of the belt 20 is positioned. The toothed belt 20 is operated by a motor M that is different from the operating motor of the star wheel 14.

If the products are fed regularly, (figures 5 and 6), the toothed belt 20, regularly fed by the wheel 14, presents two pockets 6 in the loading position to collect the products P, said pockets, after loading, being taken for a certain length by the belt 20 and then left on the chains 10 of the conveyor T, where they move forward by the effect of their own weight (figure 6).

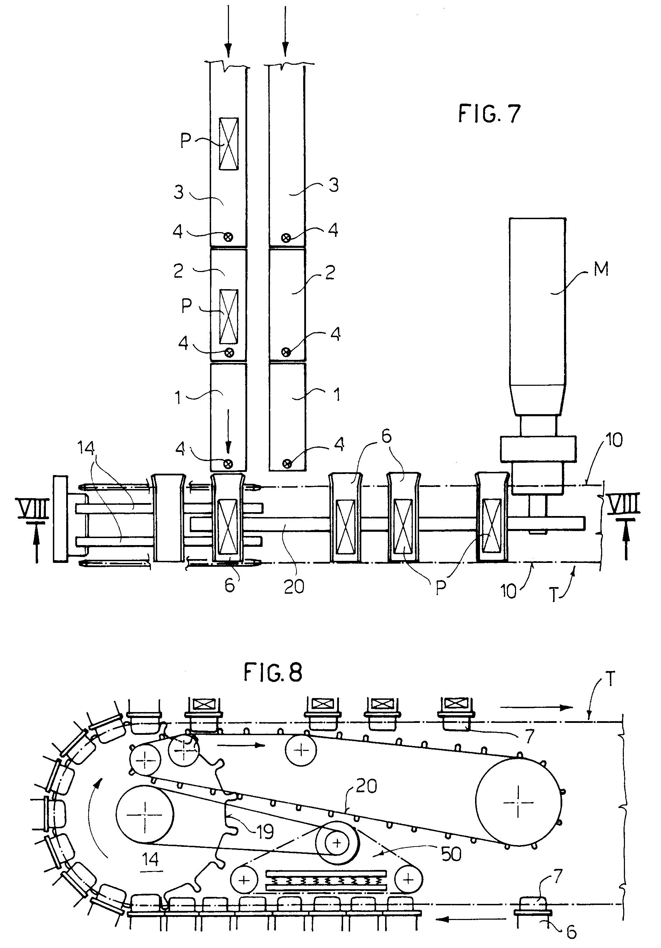

If the products P are fed irregularly, the wheel 14 interrupts the feeding to the toothed belt 20 of the pocket aimed at the line without product (the one on the right in the example in figure 7), but keeps on feeding the pockets aimed at the line where the products P are regularly loaded (the one on the left in figure 7).

Of course, what has been said holds good both when the grooved wheel 14 is located at the end of the conveyor ring and on an intermediate section of the upper leg of the ring.

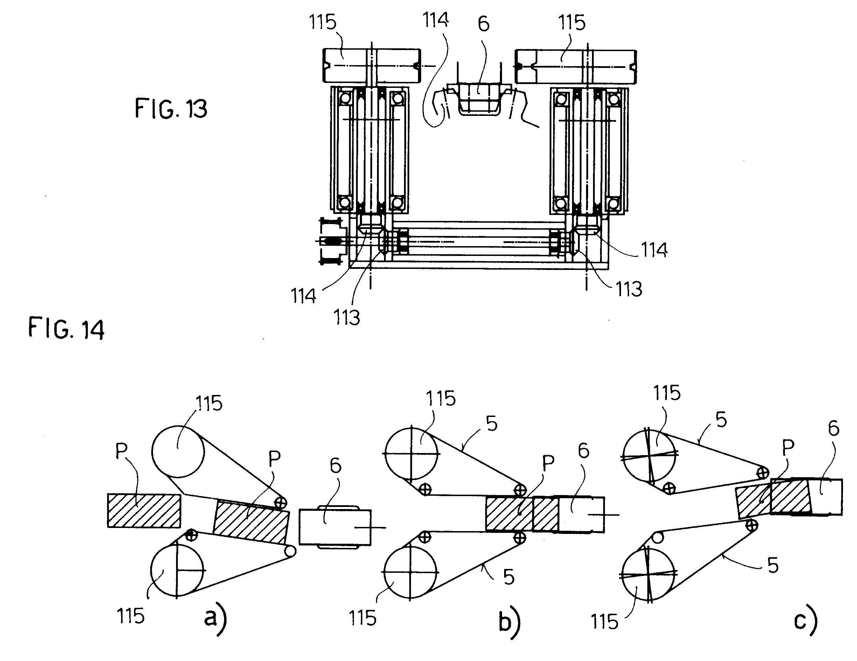

With reference to figures 11-14, a more detailed description will now be given of the working of the oscillating belts 5 located on the final section of feeder band for products P, which accompany the products in the pockets 6 with their oscillating motion, as shown in diagrammatic form in figures 14a, b, c, avoiding the need for stopping the grooved wheel 14. In such case, the grooved wheel 14 will regulate its speed according to the products P arriving.

In the case of a failure in feeding, the wheel halts, thus guaranteeing that all the pockets sent to the product picking up area are filled.

The oscillating motion of the side belts 5 is constrained by means of a cam box 100 or switch (oscillator), which receives the motion from the same direct current motor 101 which operates the grooved wheel 14, by means of a belt transmission 102. One of the belts 5 is connected to the cam box 100 by means of a rigid arm, 103, and the two side belts are connected with each other by means of a small arm 104. Between the drive and the cam box 100 a flywheel 105 is also mounted whose task is to balance the masses. The variations in speed of the grooved wheel 14 (including halts) are therefore always synchronized with the oscillating motion of the side belts 5 which accompany the introduction of the product in the pockets 6 without the pockets being halted.

In figures 11-13 the motorization is also shown of the belts 5, which takes place by means of a motor 110 and a transmission with belts 111, 112, and bevel gear pairs 113, 114, which operate pulleys 115, around which the belts 5 are wound.

## Claims

1. An apparatus for conveying, collecting and grouping products or packs (P), coming from at least one conveyor (3) at the exit from a production line, which are directed towards cartoning for example, comprising an endless conveyor (T), on which a number of idle trolleys (7) are foreseen provided with respective collection pockets (6), into which the products (P) are individually received, to be subsequently conveyed, collected and grouped, characterized in that inside the said conveyor (T) at least one accelerator unit (50) is foreseen which exerts a thrust on the trolleys (7) in the direction of the forward movement of the conveyor (T), the said accelerator device, (50) consisting of a second conveyor (51) rotating at a higher speed with respect to the conveyor (T), is thrust against the inner face of the trolleys (7) exerting rolling friction on them.

2. An apparatus according to claim 1, characterized in that an accelerator unit (50) is foreseen before the loading area of the products (P), so as always to guarantee the presence of pockets (6) in such area.

3. An apparatus according to claim 1 or 2, characterized in that an accelerator unit (50) is foreseen in the collection and grouping area of the trolleys (7) with pockets (6) provided with products (P), to facilitate the evacuation of the trolleys themselves after the products have been expelled.

4. An apparatus according to any one of the previous claims, characterized in that the said second conveyor (51) of the accelerator unit (50) consists of a pair of thrust chains pressed against the inner face of the trolleys (7) by a spring system (52).

5. An apparatus according to claim 4, characterized in that it foresees means for cancelling the thrust of the said springs (52), so as to keep the said chains (51) spaced out from the inner face of the trolleys (7).

6. An apparatus according to any one of the previous claims, characterized in that the said second conveyor (51) is provided with autonomous driving means.

7. An apparatus according to claim 2, characterized in that an independently operated grooved wheel (14) is foreseen in the said loading area for the products P, said wheel being provided with seats (19) for receiving the trolleys (7).

8. An apparatus according to claim 7, characterized in that the said grooved wheel (14) is located at one return end of said endless conveyor (T), the other end of which is motorized by means of at least one toothed pinion (12).

9. An apparatus according to claim 7, characterized in that the said grooved wheel (14) is located at an intermediate point of the upper leg of the said endless conveyor (T).

10. An apparatus according to claim 8 or 9, characterized in that the said accelerator unit (50) receives motion from the shaft (57) of the said grooved wheel (14) or from the shaft (59) on which the said sprocket wheels (12) are mounted.

11. An apparatus according to any one of the previous claims, characterized in that the said endless conveyor (T) consists of two double side chains (10), in which the outer rollers (17) are guided by special chain-guides (11) and receive their motion by means of toothed sprocket wheels (12), while the inner rollers (18) guide the trolleys (7), which although they are idle are able to move forward along the conveyor by the effect of their own weight.

12. An apparatus according to any one of the previous claims, characterized in that on the end section of the said at least one feeder conveyor (3) for the products (P) two side belts (5) are foreseen, which can move in an oscillating way in the advancing direction of the collection pockets (6), to facilitate the introduction of the products P into the pockets, with particularly high speeds, the oscillating motion of the belts (5) being received from a motor (101) which operates the said grooved wheel (14).

13. An apparatus according to any one of the previous claims, characterized in that the rotation speed of the said grooved wheel (14) varies according to the speed at which the products are fed.

14. An apparatus according to any one of the previous claims, which is provided with a plurality of feeding lines (3) and a further conveyor (20) fed in phase by the grooved wheel (14), in such a way that a pocket (6) is set in correspondence with each line (3) regularly feeding a product (P).
